# EUROPEAN PATENT APPLICATION

(11) **EP 3 239 674 A1**
(43) Date of publication of application: **01.11.2017**
(21) Application number: 16166774.6
(22) Date of filing: 25.04.2016
(51) Int. Cl.: G01K 7/02, G01K 13/02, G01F 1/684, G01F 1/688

(54) **A FLUID FLOW SENSOR AND A METHOD FOR ITS MANUFACTURING**

(71) Applicant: Universitat Autònoma de Barcelona, 08193 Bellaterra (Cerdanyola del Valles) (ES); Consejo Superior de Investigaciones Cientificas (CSIC), 28006 Madrid (ES); Universitat Politècnica De Catalunya, 08034 Barcelona (ES)
(72) Inventor: Lopeandia Fernández, Aitor, 08193 Bellaterra (Cerdanyola) (ES); Pérez Marin, Antonio Pablo, 08193 Bellaterra (Cerdanyola) (ES); Rodríguez Viejo, Javier, 08193 Bellaterra (Cerdanyola) (ES); Abad Muñoz, Libertad, 08193 Bellaterra (Cerdanyola) (ES); Muñoz Pascual, Francisco Javier, 08193 Bellaterra (Cerdanyola) (ES); López Martínez, Antonio Miguel, 08800 Vilanova i la Geltrú (ES)

(57) **Abstract**

The present relates to a fluid flow sensor comprising a thermoelectric device having:
- a first member (1) having a surface to be exposed to a fluid flow, to change its temperature along a temperature range;
- a second member (2) submitted to a temperature different to the temperatures of said temperature range, and thermally isolated from said first member (1); and
- n-doped (Ne) and p-doped (Pe) thermoelectric elements connected so that a differential in the temperatures between the first (1) and second (2) members causes the generation of an electrical signal at the output electrodes (E1, E2), by the Seebeck effect, without applying any energy power to the fluid flow sensor, so that the fluid flow sensor is energetically autonomous.

The invention also relates to a method for manufacturing the sensor, to a fluid flow detection device including the sensor and to uses of the detection device.

## Description

### Technical field

The present invention generally concerns, in a first aspect, to a fluid flow sensor comprising a thermoelectric device, and more particularly to a sensor configured and arranged to detect, by convection, very small flow variations.

A second aspect of the invention concerns to a fluid flow detection device comprising the sensor of the first aspect of the invention.

A third aspect of the invention relates to a method for the manufacturing of the sensor of the first aspect of the invention.

A fourth aspect of the invention relates to a use of the fluid flow detection device of the second aspect of the invention.

### State of the art

Different kinds of miniaturized fluid flow sensors are known, generally using a resistive element heated at a temperature by means of an electrical current, due to the Joule effect, and the changes in said temperature caused by the circulation of a gas flow are used as the flow indicators.

Some of said fluid flow sensors are described in US6763710B2 and US6813944B2, which disclose the use of different kind of temperature sensors, including thermopiles (i.e. a thermoelectric device), and a heating element, such as a resistive heating element.

Said kind of sensors require the use of an electrical current for performing the fluid flow detections.

Some other miniaturized fluid flow sensors comprising a thermoelectric device are disclosed in US6443003B1 and in WO03062134A1 all of them including a heater, implemented whether in the form of a resistor or by other means, such as by injecting current into thermoelectric elements to generate heat by the Peltier effect.

Some bibliographic references reflecting the state of the art regarding fluid flow sensors are listed at the end of the present section, and the main features of most of them are indicated in the table below.

| Material | Configuration | Gas | Resolution | Range | Power consumption | Ref. |
|---|---|---|---|---|---|---|
| Ni in Si₃N₄ | Hot layer/Calorimetric | Air | <1% | 0-20 m/s | 50mW | [2] |
| Pt CNT | Hot thread | N₂ gas | | 0-3 m/s | | [3] |
| Si and Si₃N₄ | Calorimetric | N₂ gas | | 0-10 mL/min | 600mW | [4] |
| pSi and Si₃N₄ | Hot layer | Air | | 0-30 m/s | | [5] |
| Pt Si₃N₄ | Calorimetric | Air | Pᵢₙ dependent | 0-4 m/s | 2-20mW | [6] |
| Pt Pirex | Hot layer | CO₂ gas | 0.3 m/s | 0-20 m/s | 14mW | [7] |
| Au polyimide | Hot layer | N₂ gas | 10 mL/min | 0-200 mL/min | | [8] |
| Pt Au Si₃N₄ | Calorimetric | Air | | 0-32 m/s | | [9] |
| Ti/Pt ceramic | Calorimetric | Air | 0.3 m/s | 0-8 m/s | 100mW | [10] |
| Ti/Pt Si₃N₄ | Hot layer | Air | | 0-11 m/s | 15-150mW | [11] |
| Cr/Pt/Ni/Pt polyamide | Hot thread | Air | Pᵢₙ dependent | Pᵢₙ dependent | P dependent | [12] |
| Cr/Au polyamide | Hot layer | N₂ gas | | 0-6 m/s | | [13] |
| Cr/Ni/Pt polyamide | Hot layer | Air | 0.1 m/s | 0-15 m/s | 30mW | [14] |
| Cr/Ni Si₃N₄ | Hot thread | N₂ gas | 2cm/s | 0-1.6 m/s | | [15] |
| Pt | Hot thread | Air | | 7-40 m/s | | [16] |
| Ge/Si₃N₄/SiOₓ | Calorimetric | Air | 1cm/s | 0-5 m/s | 0.25-5.8 mW | [17] |

In thermo-resistive sensors (the most common types of fluid flow sensors), as stated above, a metal element is heated by Joule effect to inject current, and the evolution of its temperature is monitored by measuring its resistance. As can be seen in the table above, said sensors require energy consumption in the order of 10-50 mW, depending on the characteristics of the sensor, to achieve detections having a resolution lower than 1 cm/s.

Several other flux sensors can be find in the literature ([18], [19]) using thermoelectric elements to sense temperature differences between areas of the chip with different thermal masses, all of them also needing to use a heater.

Thermal flow sensors typically require to heat the central membrane and operate either measuring the power required to maintain a temperature difference (calorimetric) or injecting a constant power in the membrane and measuring the establish temperature gradient.

For example, in one of the most recent flow sensor device presented by Buchner et al. [20], they use as thermopile a 300nm p-doped polysilicon as one thermopile material and WTi (90% W/10% Ti) with a thickness of 200 nm as the second thermopile material. The polycrystalline structure of both layers limits the carriers mobility and therefore a considerable thickness should be maintained to restrain the impedance. In terms of thermal contact, using thick thermoelectric films the resulting system presents a high heat capacity and a large thermal link.

Reference [1] discloses a micropower thermoelectric generator, energetically non-autonomous, and that is focused in the design of a thermoelectric device only for power generator purposes, i.e. the thermoelectric elements must have a low electrical resistivity, and a high electrical mobility and conductivity. The thermoelectric elements of the device there disclosed also have a high thermal conductivity (of about 60 W m⁻¹ K⁻¹), and although it is suggested that said thermal conductivity could be reduced if the thickness of the Si membrane was reduced, it is also stated that it would cause an increase of the internal electrical resistance which could require the use of complex signal conditioning steps to power output devices.

Therefore, reference [1] teaches away from using or modifying the device there disclosed for providing a fluid flow sensor.

On the other hand, regarding the use of SOI (Silicon On insulator) substrates, up to the knowledge of the present inventors only few examples of flow sensors use SOI substrates, but none as thermoelectric sensor. In most of them, the SOI substrates are used to fabricate microelectromechanical structures with the capability to measure the gas velocity (and therefore the flux) through the deformation induced by momentum transfer of the gas [21].

To sum up, all the fluid flow sensors of the state of the art, including those comprising a thermoelectric device, require, for their operation, the inclusion of a heater to heat the fluid to be sensed, and are therefore energetically non-autonomous, while offering a low resolution.

### References:

[1] A.P. Perez-Marín, A.F. Lopeandia, L. Abad, P. Ferrando-Villaba, G. Garcia, A.M. Lopez, et al., Micropower thermoelectric generator from thin Si membranes, Nano Energy. 4 (2014) 73-80. doi:10.1016/j.nanoen.2013.12.007.
[2] Adamec, R.J.; Thiel, D.V. Self heated thermo-resistive element hot wire anemometer. IEEE Sens. J. 2010, 10, 847-848.
[3] Ito, Y.; Higuchi, T.; Takahashi, K. Submicroscale flow sensor employing suspended hot film with carbon nanotube fins. J. Therm. Sci. Technol. 2010, 5, 51-60.
[4] Nguyen, N.T.; Dötzel, W. Asymmetrical locations of heaters and sensors relative to each other using heater arrays: A novel method for designing multi-range electrocaloric mass-flow sensors. Sens. Actuat. A 1997, 62, 506-512.
[5] Liu, C.; Huang, J.-B.; Zhu, Z.; Jiang, F.; Tung, S.; Tai, Y.-C.; Ho, C.-M. A micromachined flow shear-stress sensor based on thermal transfer principles. J. Microelectromechanical Syst. 1999, 8, 90-99.
[6] Fürjes, P.; Légrádi, G.; Dücső, C.; Aszódi, A.; Bársony, I. Thermal characterisation of a direction dependent flow sensor. Sens. Actuat. A 2004, 115, 417-423.
[7] Domínguez, M.; Jiménez, V.; Ricart, J.; Kowalski, L.; Torres, J.; Navarro, S.; Romeral, J.; Castañer, L. A hot film anemometer for the Martian atmosphere. Planet. Space Sci. 2008,56,1169-1179.
[8] Ahrens, R.; Schlote-Holubek, K. A micro flow sensor from a polymer for gases and liquids. J. Micromech. Microeng. 2009, doi: 10.1088/0960-1317/19/7/074006.
[9] Ma, R.-H.; Wang, D.-A.; Hsueh, T.-H.; Lee, C.-Y. A MEMS-based flow rate and flow direction sensing platform with integrated temperature compensation scheme. Sensors 2009,9,5460-5476.
[10] Shen, G.-P.; Qin, M.; Huang, O.-A.; Zhang, H.; Wu, J. A FCOB packaged thermal wind sensor with compensation. Microsyst. Technol. 2010, 16, 511-518.
[11] Hung, S.-T.; Wong, S.-C.; Fang, W. The development and application of microthermal sensors with a mesh-membrane supporting structure. Sens. Actuat. A 2000, 84, 70-75.
[12] Chen, J.; Fan, Z.F.; Zou, J.; Engel, J.; Liu, C. Two-dimensional micromachined flow sensor array for fluid mechanics studies. J. Aerosp. Eng. 2003, 16, 85-97.
[13] Tan, Z.; Shikida, M.; Hirota, M.; Xing, Y.; Sato, K.; Iwasaki, T.; Iriye, Y. Characteristics of on-wall in-tube flexible thermal flow sensor under radially asymmetric flow condition. Sens. Actuat. A 2007, 138, 87-96.
[14] Liu, P.; Zhu, R.; Que, R. A flexible flow sensor system and its characteristics for fluid mechanics measurements. Sensors 2009, 9, 9533-9543.
[15] Kaanta, B.C.; Chen, H.; Zhang, X. Novel device for calibration-free flow rate measurements in micro gas chromatographic systems. J. Micromech. Microeng. 2010, doi: 10.1088/0960-1317/20/ 9/095034.
[16] Bailey, S.C.C.; Kunkel, G.J.; Hultmark, M.; Vallikivi, M.; Hill, J.P.; Meyer, K.A.; Tsay, C.; Arnold, C.B.; Smits, A.J. Turbulence measurements using a nanoscale thermal anemometry probe. J. Fluid Mech. 2010, 663, 160-179.
[17] Cubukcu, A.S.; Zernickel, E.; Buerklin, U.; Urban, G.A. A 2D thermal flow sensor with sub-mW power consumption. Sens. Actuat. A 2010, 163, 449-456.
[18] Yanqing Zhu, Bei Chen, Ming Qin and Qing-An Huang; 2-D Micromachined Thermal Wind Sensors-A Review; IEEE INTERNET OF THINGS JOURNAL, vol 1, n. 3, JUNE 2014.
[19] Jonathan T. W. Kuo, Lawrence Yu and Ellis Meng; Micromachined Thermal Flow Sensors-A Review; MICROMACHINES 2012, 3, 550-573; doi:10.3390/mi3030550.
[20] Rainer Buchner, Christoph Sosna, Marcus Maiwald, Wolfgang Benecke, Walter Lang; A high-temperature thermopile fabrication process for thermal flow sensors; SENSORS AND ACTUATORS A 130-131 (2006) 262-266.
[21] Nicolas André, Bertrand Rue, Gilles Scheen, Denis Flandre, Laurent A. Francis,Jean-Pierre Raskin; Out-of-plane MEMS-based mechanical airflow sensor co-integrated in SOI CMOS technology; SENSORS AND ACTUATORS A 206 (2014) 67- 74.

### Description of the invention

It is necessary to provide an alternative to the state of the art which covers the gaps found therein, by providing a fluid flow sensor which does not require the inclusion of a heater, neither an electrical heater nor any other kind of heater, and which clearly improves the detection resolution offered by the fluid flow sensors of the state of the art.

To that end, the present invention relates, in a first aspect, to a fluid flow sensor comprising a thermoelectric device, which, in contrast to the known devices, comprises, in a characteristic manner:
- a first member having a surface to be exposed to a fluid flow, wherein said first member is configured and arranged to change its temperature by convection from said fluid flow or a variation thereof, along a temperature range;
- a second member submitted to a temperature which is different to the temperatures included in said temperature range, and substantially thermally isolated (i.e. with a very low thermal conductance. i.e. 10⁻⁶-10⁻⁹ W/K) from said first member; and
- at least one n-doped thermoelectric element and one p-doped thermoelectric element connected electrically in series between two output electrodes and thermally in parallel between said first and second members, such that a differential in the temperatures between said first and second members causes the generation of an electrical signal at said output electrodes, by the Seebeck effect, without applying any energy power to the fluid flow sensor, so that the fluid flow sensor is energetically autonomous.

No input electrodes are provided in the sensor of the present invention, as no electrical current is needed to be applied to the thermoelectric elements, which thus operate only by the Seebeck effect, not by the Peltier effect (in contrast to the sensor of US6443003B1).

None heater is included in the sensor of the first aspect of the invention, neither electrical nor of any other type.

The above mentioned substantial thermal isolation, i.e. very low thermal conductance, is required to ensure that a sufficient temperature increase or decrease is produced from small fluid flow variations, so that the device generates a sufficient voltage for providing the detection of said small fluid flow variations.

Preferably, the fluid flow sensor of the first aspect of the invention is a gas flow sensor.

For a preferred embodiment, the above mentioned first member has a calorific capacity, at room temperature, below 1500 nJ/K, preferably below 700 nJ/K. This reduced calorific capacity ensures a reduce time constant, thus allowing to perform real-time or near real-time measurements.

For an embodiment, the second member has a calorific capacity at least two orders of magnitude higher than the one of the first member, more preferably three orders of magnitude higher, and more preferably between three and five orders of magnitude higher. This high difference in the calorific capacities of the first member and the second member causes significant variations in temperature to external perturbations, as the first member will take a much less time (generally, only a few ms) than the second member to reach a steady-state temperature.

All of the above will cause a quasi-instantaneous temperature variation between the thermoelectric joints, i.e. between the first and the second members, which will result in the creation of a potential difference between them, which can be measured after an amplification stage.

According to an embodiment, the first member is composed of any thermally conductive material in thin film form having a thickness between 10 and 80 nm.

For an implementation of said embodiment, said thermally conductive material is Si-based, Silicon Nitride or Silicon Oxide.

Regarding the thermoelectric elements, they have, for an embodiment, a thermal conductivity below 5 W m⁻¹ K⁻¹, and preferably around or below 2 W m⁻¹ K⁻¹.

Preferably, the thermoelectric elements are semiconductor layers having a thickness between 10 nm and 50 nm, and a doping level below 10¹⁸ cm⁻³ to maximize the Seebeck coefficient to achieve maximum voltage generation to a given temperature variation. The sensor of the present invention, when connected to an ultra-low power electronic system, external or integrated into the same chip into which the sensor is built, is able to detect variations of less than 1 mK at room temperature.

Said semiconductor layers are generally made of a monocrystalline and/or polycrystalline Si-based or Si compatible material, such as alloys of SiGe, Mg-, Ni-, or MgMn-silicides or of any other Si-based material.

A novelty of the present invention is the use, for some embodiments, of polycrystalline materials as thermoelectric element, and the possibility of a controlled doping by ion implantation or 'in-situ' during the growth of the ultrathin layers.

According to an embodiment, both the thin film and at least a portion of each of the thermoelectric semiconductor layers are suspended from the second member.

Generally, the second member is made of Silicon.

For an embodiment, the second member forms a non-planar frame defining a central opening over which the thin film and said at least a portion of each of the thermoelectric semiconductor layers are suspended.

Preferably, the fluid flow sensor of the first aspect of the invention is CMOS compatible.

The extremely low thermal mass per unit area of membrane light mass paved by the use of monocrystalline thin films in the sensor of the first aspect of the present invention, according to some embodiments, provides the intended results of allowing to detect low flows or flow variations without needing to use a heater, and thus providing a fluid flow sensor which is energetically autonomous. The use of SOI to define the monocrystalline legs of the thermopiles, maintaining an appropriate carrier mobility, permits to drastically reduce the thermal link of the central membrane while keeping a moderate electrical impedance. The reduced thermal link is the base to escape from the necessity to heat the central membrane that the rest of the sensors present in the literature require.

The design of the fluid flow sensor of the first aspect of the invention is based on ultrathin membrane structures or suspended structures, simultaneously maximizing the contact area with the gas and the thermal insulation.

Another critical aspect of the fluid flow sensor is that when working in open circuit, the impedance of the pn junctions is not a critical issue for the sensor operation, and therefore materials, doping levels and ultrathin thicknesses have been chosen in order to optimize the sensitivity of the thermoelectric device for generating temperature differences to small variations of an external variable, in this case of a fluid flow, generally a gas flow.

A second aspect of the invention relates to a method for manufacturing the fluid flow sensor of the first aspect, comprising performing a CMOS MEMS surface micromachining step for fabricating, over the above mentioned second member, the above mentioned first member and thermoelectric elements.

A third aspect of the invention concerns to a fluid flow detection device, comprising:
- at least one sensor according to the first aspect of the invention, and
- an electronic system electrically connected to the above mentioned two output electrodes to receive electrical signals generated by the thermoelectric elements, said electronic system being adapted to condition and process said received electrical signals and provide an output signal based on the result of said processing.

Several uses of the fluid flow detection device of the second aspect of the invention are provided by the fourth aspect of the present invention, including a use for detecting apnea and a use for detecting gas leaks.

For the use for detecting apnea, the flow sensor is placed near the mouth and/or nose of a user to detect its breath exhalation flow, and the electronic system of the detection device is adapted to generate an alarm signal when no breath flow is detected during a predetermined time.

### Brief description of the drawings

The previous and other advantages and features will be more fully understood from the following detailed description of embodiments, with reference to the attached drawings, which must be considered in an illustrative and non-limiting manner, in which:
Figure 1(a) is a plan view of the fluid flow sensor of the present invention, for an embodiment associated to a cantilever-like suspended structure;
Figure 1(b) is a cross-sectional perspective view of a portion of the device of Figure 1(a) included in the illustrated dashed line area;
Figure 2 is a plan view of the fluid flow sensor of the present invention, for another embodiment for which a central membrane is suspended over a central opening defined in a silicon massive frame. Dotted region denotes the region liberated by using surface micromachining;
Figure 3 is a plan view of the fluid flow sensor of the present invention, for a further embodiment, similar to the one of Figure 2 but where all the thermoelectric elements are electrically connected in series and extend up to the centre of the central membrane. Dotted region denotes the region liberated by using surface micromachining;
Figure 4a shows the fluid flow sensor of the present invention for the same arrangement as in Figure 2, which has been modelled according to the finite element (FE) method for obtaining temperature values along time for the three indicated locations;
Figure 4b is a graph showing the transient heating behaviour of the device of the first aspect of the invention at the three different locations indicated in Figure 4b, obtained by using FE modelling;
Figure 5a is a graph showing the temperature gradient produced by different flow velocities for the sensor of the present invention according to the arrangement of Figure 4a (shown in a decreased view within the graph), which has been obtained also by FE modelling;
Figure 5b shows steady state temperature maps representing the average temperatures at different locations of the central membrane of the device, for the arrangement of Figure 4a, as a function of the air flux velocity, for different flow velocity scenarios, wherein the map has been obtained also by FE modelling;
Figure 6 is a graph showing a steady-state measurement of the sensing voltage generated by a gas flowing over the sensor of the present invention in the lower gas flow range (0 to 3 mm/s), also for the arrangement of Figure 4a and by using FE modelling; and
Figure 7 is a graph showing the time dependent thermoelectric voltage variation upon a flux variation over the surface of the sensor, also for the arrangement of Figure 4a and by using FE modelling.

### Detailed description of several embodiments

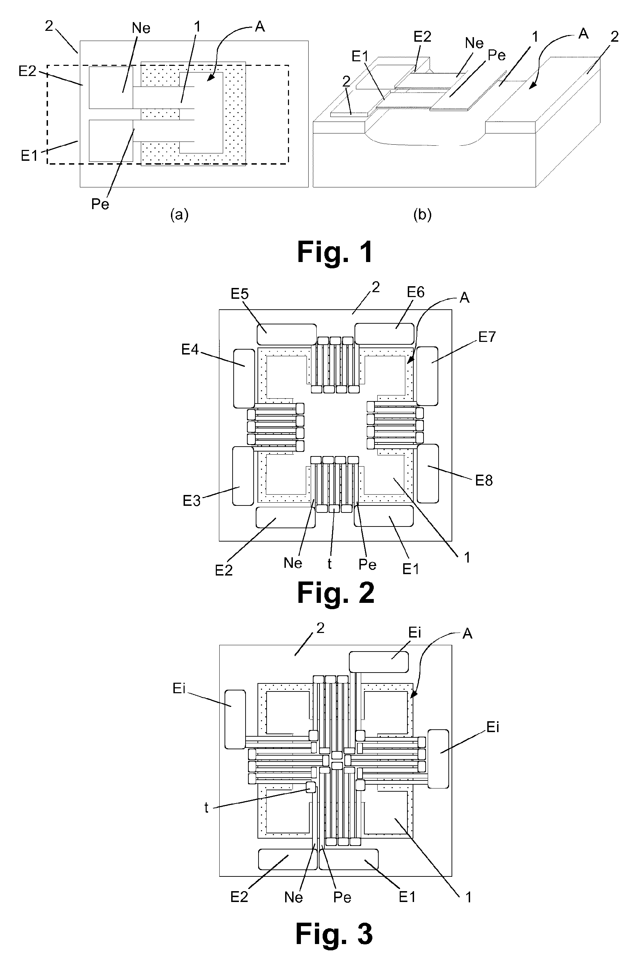

Figure 1 shows a first embodiment of the fluid flow sensor of the present invention, comprising a thermoelectric device which comprises:
- a first member or central membrane 1, having a surface to be exposed to a fluid flow, wherein the central membrane 1 is configured and arranged to change its temperature by convection from said fluid flow or a variation thereof, along a temperature range;
- a second member 2, in the form of a rectangular frame (for the illustrated embodiment), which is submitted to a temperature which is different to the temperatures included in the above mentioned temperature range, and substantially thermally isolated from the central membrane 1; and
- one n-doped thermoelectric layer Ne and one p-doped thermoelectric layer Pe (in the form of very thin elongated strips) connected electrically in series between two electrodes E1, E2 and thermally in parallel between the central membrane 1 and the frame 2.

The frame 2, usually a silicon massive frame, has a through opening A over which, for the embodiment of Figure 1, the membrane 1 and most of the length of each of the thermoelectric semiconductor layers Ne, Pe are suspended from the frame 2, according to a cantilevered-like suspended arrangement.

The frame 2 is locate over a substrate, generally made of silicon, and the through opening A1 extends into a recessed central portion of the substrate liberated by surface micromachining. In fact, the whole device is manufactured, preferably, by surface micromachining.

The embodiment illustrated in Figure 1 is a simple version of the sensor of the invention, which can be modified by adding a plurality of further n-doped Ne and p-doped Pe thermoelectric layers connected electrically in series between the two output electrodes E1, E2 and thermally in parallel between the central membrane 1 and the frame 2.

Another embodiment of the sensor of the invention is shown in Figure 2, in this case for an arrangement for which the central membrane 1 is suspended over the opening A, but not in a cantilevered-like structure but attached to inner edges of the frame 2 by four corresponding groups of n-doped Ne and p-doped Pe thermoelectric layers (in the form of very thin and narrow elongated strips), where the thermoelectric layers Ne, Pe of each group are connected electrically in series between two corresponding output electrodes E1, E2; E3, E4; E5, E6 and E7, E8, through respective electrically conductive pads t, and thermally in parallel between the central membrane 1 and the frame 2.

In this case, each group of thermoelectric layers is electrically independent from the others, providing thus four respective independent measurements, one per pair of output electrodes E1, E2; E3, E4; E5, E6 and E7, E8. However, if said electrodes are connected such that all the n-doped Ne and p-doped Pe thermoelectric layers are serially connected, a single measurement is provided between the end electrodes of said electrical connection, for example between output electrodes E1 and E2, using all the thermoelectric layers.

A further embodiment of the sensor of the invention is shown in Figure 3, where in this case, as mentioned above, all the n-doped Ne and p-doped Pe thermoelectric layers are serially connected between two end output electrodes E1, E2, through several intermediate electrodes Ei.

The embodiment of Figure 3 further differs from the one of Figure 2 in that the pads t which connect the n-doped Ne and p-doped Pe thermoelectric layers to the central membrane 1 are closer to the centre of the membrane 1, being thus the n-doped Ne and p-doped Pe thermoelectric layers longer than the ones of Figure 2.

For all the above embodiments, the number thermoelectric layers is just illustrative and can be adapted to the sensing requirements of the specific application.

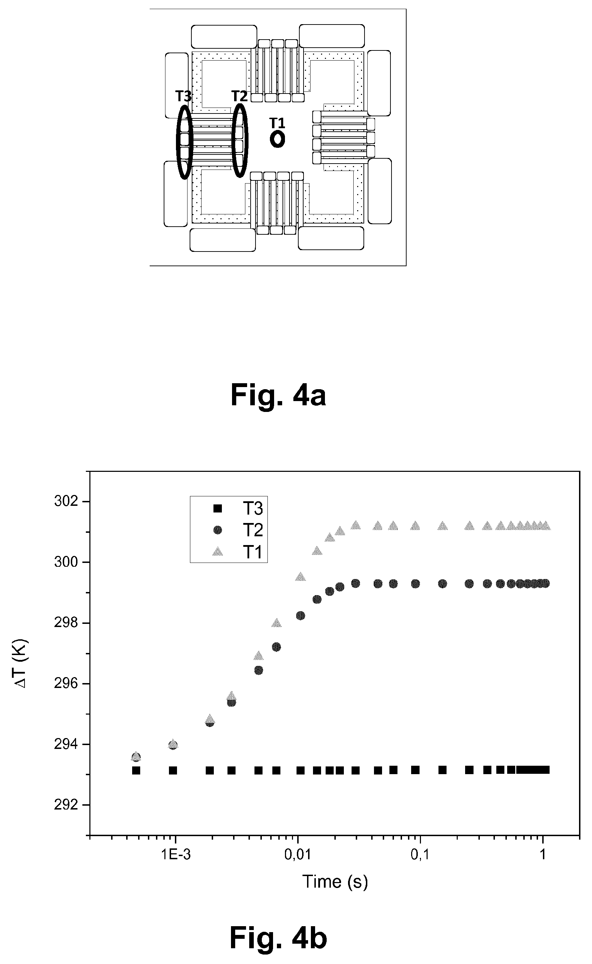

The arrangement of Figure 3 maximizes the thermoelectric signature with respect to the one of Figure 2, as will be stated below based on Figure 4.

The present inventors have modelled, by using FE modelling, the thermal behaviour of the sensor of the present invention for the arrangement of Figure 2, when it is used to measure a breath flux of air (humid air at 310K). The central membrane 1, originally at ambient temperature (293.16K), experiences a fast heating due to the convection through hot air of exhalation. Final temperature difference depends on the air velocity.

Figure 4b shows the temperature evolution evaluated at the different locations indicated in Figure 4a, i.e. at the border of the silicon massive frame 2 (T3), at the sensing part of the membrane 1 (T2), and at the centre of the membrane 1 (T1), while a transient heating behaviour is promoted by a heat flux of humid air at human body temperature.

From the results obtained and shown in the graph of Figure 4b, it can be stated that at the centre of the membrane 1 (T1) the temperature variation is higher than at the sensing part of the membrane 1 (T2). From this results, the arrangement of Figure 2 has been improved and modified to arrive at the optimized arrangement of Figure 3, which places the sensing part much closer to the centre of the membrane 1. I.e., due to the parabolic resulting profile of Figure 4b said optimized design of the sensor (shown in Figure 3) has been provided, which accounts for the maximum temperature gradient.

As shown in figure 4b if the flux velocity is maintained along time, the system reaches a thermal steady-state, and then each temperature gradient can be associated to a given air flux velocity.

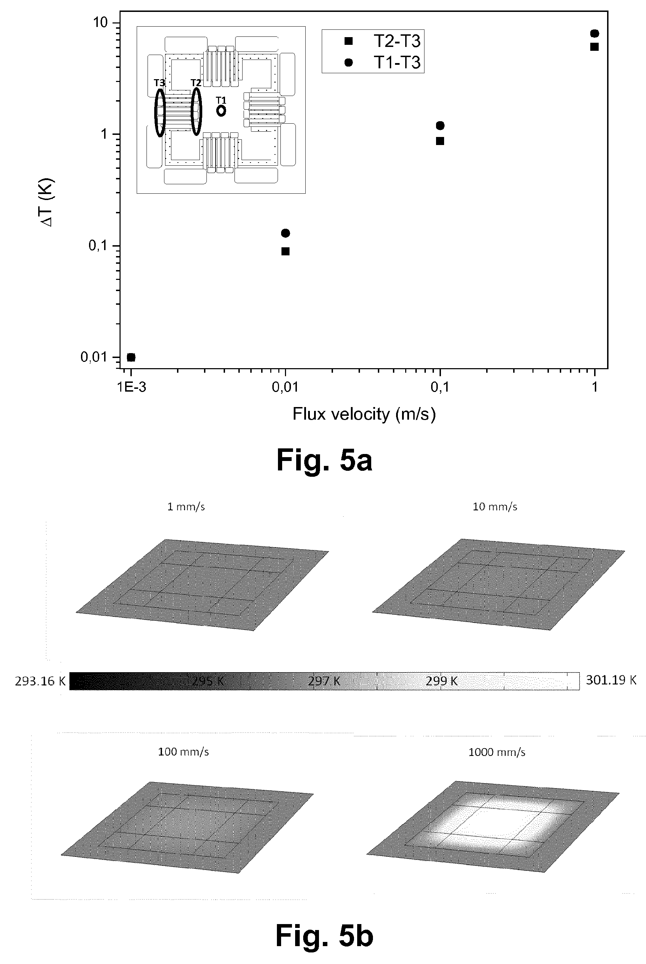

The FEM experiment is ran for a series of different air flux velocities (1 mm/s to 1 m/s), obtaining different temperature gradients as shown in Figure 5 (a) between the regions identified in Figure 4a, i.e. for T1-T3 and for T2-T3. Figure 5 (b) shows the temperature maps in the free standing membrane 1 as a function of the air flux velocity for some selected steady states of the experiment. The sensor massive frame 2 is fixed at 293,16K and gas temperature is the human temperature of about 310K.

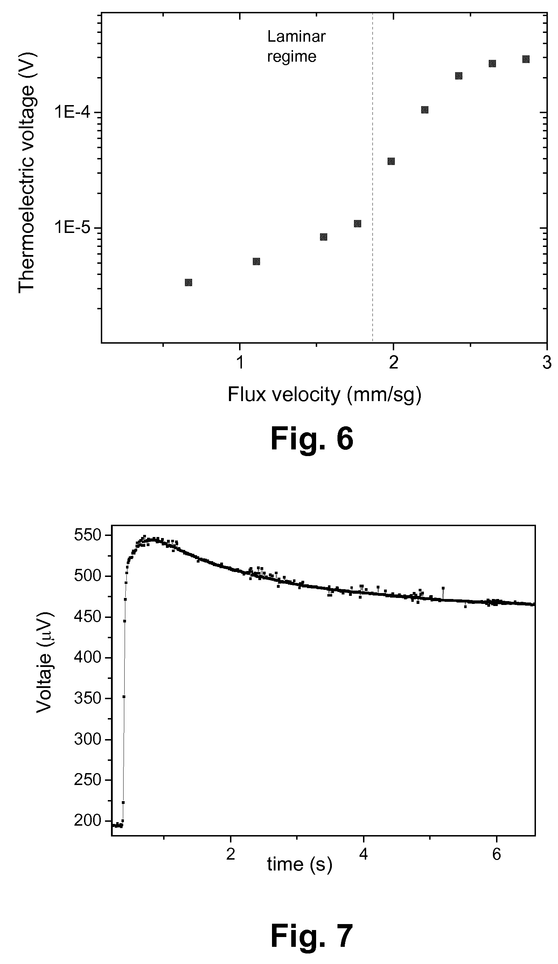

The high sensitivity of the sensor of the present invention can be appreciated in the graphs of Figures 6 and 7.

Particularly, the graph illustrated by Figure 6 shows a steady-state measurement of the sensing voltage generated by a gas flowing over the sensor of the present invention in the lower gas flow range (0 to 3 mm/s), also for the arrangement of Figure 4a and by using FE modelling.

The graph of Figure 7 shows the time dependent thermoelectric voltage variation upon a flux variation over the surface of the sensor, also for the arrangement of Figure 4a and by using FE modelling.

A person skilled in the art could introduce changes and modifications in the embodiments described without departing from the scope of the invention as it is defined in the attached claims.

## Claims

1. A fluid flow sensor, comprising a thermoelectric device, **characterised in that** said thermoelectric device comprises:
- a first member (1) having a surface to be exposed to a fluid flow, wherein said first member (1) is configured and arranged to change its temperature by convection from said fluid flow or a variation thereof, along a temperature range;
- a second member (2) submitted to a temperature which is different to the temperatures included in said temperature range, and substantially thermally isolated from said first member (1); and
- at least one n-doped thermoelectric element (Ne) and one p-doped thermoelectric element (Pe) connected electrically in series between two output electrodes (E1, E2) and thermally in parallel between said first (1) and second (2) members, such that a differential in the temperatures between said first (1) and second (2) members causes the generation of an electrical signal at said output electrodes (E1, E2), by the Seebeck effect, without applying any energy power to the fluid flow sensor, so that the fluid flow sensor is energetically autonomous.

2. A fluid flow sensor according to claim 1, wherein said first member (1) has a calorific capacity, at room temperature below 1500 nJ/K, preferably below 700 nJ/K.

3. A fluid flow sensor according to claim 2, wherein the second member (2) has a calorific capacity at least two orders of magnitude higher than the one of the first member (1), more preferably three orders of magnitude higher, and more preferably between three and five orders of magnitude higher.

4. A fluid flow sensor according to claim 2 or 3, wherein the first member (1) is composed of a thermally conductive material in thin film form having a thickness between 10 and 80 nm.

5. A fluid sensor according to any of the previous claims, wherein said thermoelectric elements (Ne, Pe) have a thermal conductivity below 5 W m⁻¹ K⁻¹, and preferably around or below 2 W m⁻¹ K⁻¹.

6. A fluid flow sensor according to any of the previous claims, wherein said thermoelectric elements (Ne, Pe) are semiconductor layers having a thickness between 10 nm and 50 nm, and a doping level below 10¹⁸ cm⁻³ to maximize the Seebeck coefficient.

7. A fluid flow sensor according to claim 6 or 7, wherein the semiconductor layers are made of a monocrystalline and/or polycrystalline Si-based or Si compatible material.

8. A fluid flow sensor according to claim 7, wherein the semiconductor layers are made of alloys of SiGe, Mg-, Ni-, or MgMn- silicides or of any other Si-based material.

9. A fluid flow sensor according to claim 6, 7 or 8 when depending on claim 4, wherein said thin film (1) and at least a portion of each of the thermoelectric semiconductor layers (Ne, Pe) are suspended from the second member (2).

10. A fluid flow sensor according to claim 9, wherein said second member (2) is made of Silicon.

11. A fluid flow sensor according claim 9 or 10, wherein the second member (2) forms a non-planar frame defining a central opening (A) over which said thin film (1) and said at least a portion of each of the thermoelectric semiconductor layers (Ne, Pe) are suspended.

12. A fluid flow sensor according to any of the previous claims, which is CMOS compatible.

13. A fluid flow detection device, comprising:
- at least one sensor according to any of the previous claims, and
- an electronic system electrically connected to said two output electrodes (E1, E2) to receive electrical signals generated by the thermoelectric elements (Ne, Pe), said electronic system being adapted to condition and process said received electrical signals and provide an output signal based on the result of said processing.

14. A method for manufacturing the fluid flow sensor of any of claims 1 to 12, comprising performing a CMOS MEMS surface micromachining step for fabricating, over said second member (2), said first member (1) and said thermoelectric elements (Ne, Pe).

15. Use of a fluid flow detection device according to claim 14, for detecting apnea or gas leaks.
